# EUROPEAN PATENT SPECIFICATION

(11) **EP 3 660 487 B1**
(45) Date of publication and mention of the grant of the patent: **05.10.2022**
(21) Application number: 19211474.2
(22) Date of filing: 26.11.2019
(51) Int. Cl.: G01N 15/06, G01N 15/14, G01N 15/00, G01N 21/53

(54) **A LASER AUTO-FOCUS PM 2.5 DUST SENSOR**
LASER AUTO-FOCUS PM 2.5 PARTIKEL DETEKTOR
LASER AUTO-FOCUS PM 2.5 PARTICULE SENSEUR

(30) Priority: 29.11.2018 CN 201811439365
(43) Date of publication of application: 03.06.2020
(73) Proprietor: HELLA GmbH & Co. KGaA, 59557 Lippstadt (DE)
(72) Inventor: Huang, Leo, Xiamen, 361000 (CN); Huang, Zhihang, Xiamen, 361000 (CN); Li, Feng, Xiamen, 361000 (CN)

(56) References cited:
- WO-A1-2018/165590
- US-A1- 2016 116 389
- US-A1- 2017 023 457
- US-A1- 2018 129 029
- US-A1- 2018 217 061

## Description

### TECHNICAL FIELD

The present invention relates to the field of air quality detection, and in particular to a laser auto-focus PM 2.5 dust sensor.

### BACKGROUND

PM 2.5 dust is only a kind of component with a small content in Earth's atmosphere, but it has a significant impact on the air quality and visibility. Compared with coarse particle matters in the atmosphere, PM 2.5 particles are of a smaller diameter, rich in toxic and harmful substances, and able to stay longer and move farther in the atmosphere, thereby affecting human health and atmospheric environmental quality more highly. To monitor the air quality in the environment, a detection device with a laser PM 2.5 dust sensor is usually used for detecting the air.

Currently, a laser PM 2.5 dust sensor refracts and focuses a laser mainly by means of a circle lens in the laser system, and detects and analyzes the concentration of PM 2.5 particles according to the change of the laser from its refraction to focusing. However the detection device is employed in complex environments, usually with high temperatures or low temperatures. In different temperature environments, the refraction index of the lens vary with the temperatures therein, such that the focus of a optical system displaces, thereby affecting the detection accuracy.

For example, WO 2018 165 590 A1 displays a lens-free microscope for monitoring air quality including a housing that contains a vacuum pump configured to draw air into an impaction nozzle. The impaction nozzle has an output located adjacent to an optically transparent substrate for collecting particles. One or more illumination sources are disposed in the housing and are configured to illuminate the collected particles on the optically transparent substrate. An image sensor is located adjacent to the optically transparent substrate, wherein the image sensor collects particle diffraction patterns or holographic images cast upon the image sensor. At least one processor is disposed in the housing and controls the vacuum pump and the one or more illumination sources. Image files are transferred to a separate computing device for image processing using machine learning to identify particles and perform data analysis to output particle images, particle size, particle density, and/or particle type data.

Furthermore, US 2018 217 061 A1 is showing a hand-held biosensor including a housing having an electromagnetic radiation emitter emitting a laser beam toward a band pass filter. The band bass filter is configured to reflect the laser beam toward a target and to permit passage therethrough of fluorescence emissions from the target. A photo-detector is configured to receive the fluorescence emissions from the target. A signal display is configured to provide an indication of fluorescence spectral data from the photo-detector. An adapter may be releasably coupled to an upper target portion of a housing of said hand-held biosensor for receiving atmospheric air.

The US 2017 023 457 A1 displays a portable ambient air quality monitor having an airflow intake for controllably allowing ambient air to enter the monitor. A photodiode is disposed at a location downstream from a fan. The airflow from the fan is laminarized by a mesh or baffle to allow a thin stream of air to flow over the photodiode. A sensing region is defined by an intersection of an airflow sampling path and an optical path. The sensing region is also disposed above the photodiode. The airflow sampling path is configured to receive laminar airflow form the airflow intake and for directing the laminar airflow into the sensing region. A light beam is generated from a laser to reflect the light beam for reducing the required area of the sensing region to detect and measure the particles floating in the ambient air.

The US 2018 129 029 A1 discloses a debris direct reflection embedded microscope which comprises a focus mechanism and a reflected light source into the pole gap of the electromagnetic debris deposition device for an on-line visual ferrograph. The focus mechanism is composed of a lens sleeve, a limit threaded sleeve, a focus threaded sleeve and a connecting seat. An image sensor is on the top of the focus mechanism and a lens is inside the lens sleeve. The focus mechanism coincides with the center axis of the electromagnetic debris deposition device. The focus mechanism and reflected light source are fixed in the connecting seat and the connecting seat connects the focus mechanism and the magnetic poles together. A transmission light source is a bi-color flat light source.

Last but not least US 2016 116 389 A1 shows a particle detector, e.g. a smoke detector. The detector includes a detection chamber and a radiation source emitting a single beam of radiation. The detector also includes a radiation receiving system and an imaging system arranged to receive radiation from a common region of interest.

In view of this, aiming to solve the disadvantages and inconvenience resulted from the imperfect structural design of the above-mentioned laser PM 2.5 dust sensor, the present inventor conceived deeply, made positive research and improved trials, and developed and designed the present invention.

### SUMMARY

The objective of the present invention is to provide a laser auto-focus PM 2.5 dust sensor whose focal point do not displace within the range of the working temperature variation, so as to improve the detection accuracy.

To achieve the above-mentioned objective, the present invention provides the technical solution as follows:
a laser auto-focus PM 2.5 dust sensor comprises a sensor body and a detection system provided within the sensor body. In the sensor body, an airflow channel is provided for gas to be detected to pass through. The detection system comprises a laser diode, a lens, and a photodiode. The laser diode and the lens are connected in match, and provided on one side of the airflow channel; in cooperation with it, the photodiode is provided within the airflow channel, and located on the side of the laser diode producing a detection laser. The laser PM 2.5 dust sensor further comprises a temperature control mechanism, which comprises a PCB, a temperature sensing assembly, and a telescopic assembly, whereat said PCB is able to obtain the temperature value of the working environment in which said sensor locates by means of said temperature sensing assembly, and further, according to the temperature value, is able to determine the moving direction and distance of the focus, whereat on the basis of the movement of said focus, said PCB is able to control said laser diode by the means of said telescopic assembly to extend toward said lens or to shrink far away from said lens, wherein the extending or shrinking distance is the same as the moving distance of said focus, such that said focus, which displaces due to temperature variation, can return to its original position. The laser diode is provided fixedly at the end of the telescopic assembly toward the airflow channel, while at the other end of the telescopic assembly is provided fixedly with the PCB. The lens is provided fixedly between the laser diode and the airflow channel. The temperature sensing assembly and the telescopic assembly are connected electrically with the PCB respectively.

The temperature control mechanism further comprises a lining assembly which is provided with a telescopic chamber and a laser chamber. The telescopic assembly is provided within the telescopic chamber and is connected slidably with the inside wall thereof. The laser diode is provided within the laser chamber and is connected slidably with the inside wall thereof. The lens is fixed at the end of the laser chamber toward the airflow channel.

The sensor body is provided with a mounting chamber, the end of which toward the airflow channel communicates with the airflow channel, while the other end of which is provided with a dismounting hole. Both the detection system and the temperature control mechanism are mounted detachably within the mounting chamber.

The lining assembly is provided with a slot, and in cooperation with it, the sensor body is provided with a pinhole and a pin.

The detection system further comprises a light absorption assembly. The light absorption assembly is fixed on the sensor body, and the detection laser produced by the laser diode, after passing through the airflow channel, irradiates onto the light absorption assembly.

After utilizing the above-mentioned solution, a laser auto-focus PM 2.5 dust sensor of the present invention is provided with a temperature control mechanism, which comprises a PCB, a temperature sensing assembly, and a telescopic assembly. The laser diode is provided fixedly at the end of the telescopic assembly toward the airflow channel, while at the other end of the telescopic assembly is provided fixedly with the PCB. The lens is provided fixedly between the laser diode and the airflow channel. The temperature sensing assembly and the telescopic assembly are connected electrically with the PCB respectively. The PCB is able to obtain the temperature value of the working environment in which the sensor locates by means of the temperature sensing assembly, and further, according to the temperature value, determines the moving direction and distance of the focus through the above-mentioned functional relationship. Then on the basis of the movement of the focus, the PCB controls the laser diode by the means of the telescopic assembly to extend toward the lens, or to shrink far away from the lens, wherein the extending or shrinking distance is the same as the moving distance of the focus, such that the focus which displaces due to temperature variation, can return its original position, thus improving the detection accuracy of the detection system to the gas to be detected.

### BRIEF DESCRIPTION OF THE DRAWINGS

Figure 1 is a schematic view of the structure of a preferred embodiment of the present invention.
Figure 2 is an exploded view of the structure of a preferred embodiment of the present invention.

### DETAILED DESCRIPTION

Hereinafter the present invention will be described in detail to further explain the technical solution thereof.

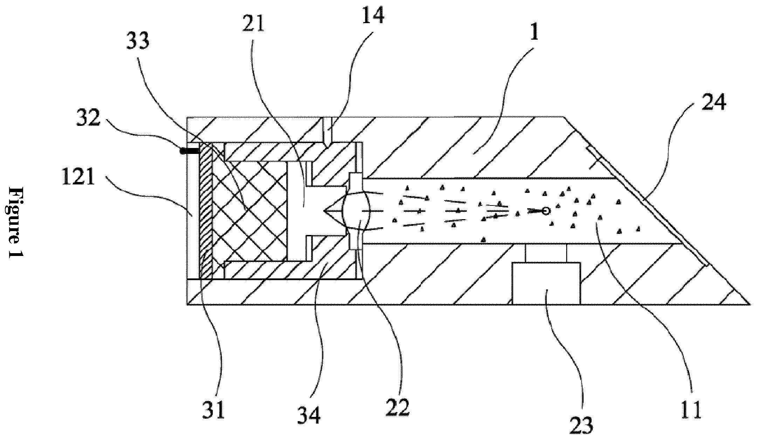

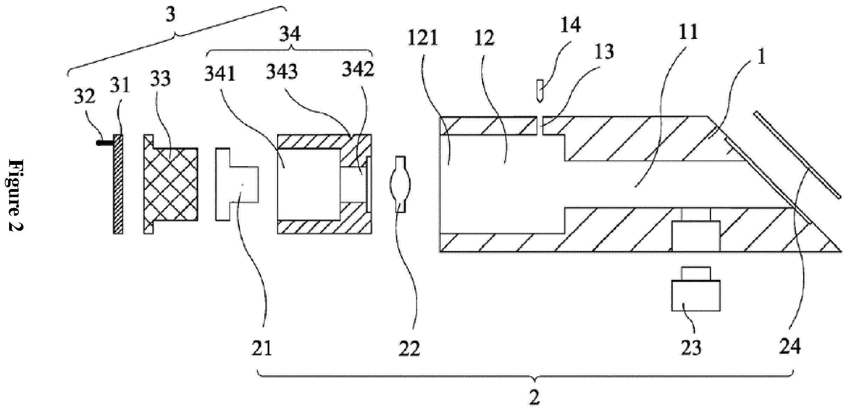

As shown in Fig.1 and Fig.2, it is a preferred embodiment of a laser auto-focus PM 2.5 dust sensor of the present invention, which comprises a sensor body 1 and a detection system 2 provided within the sensor body 1. In the sensor body 1 an airflow channel 11 is provided for gas to be detected to pass through. When in use, the laser auto-focus PM 2.5 dust sensor is activated, and the gas to be detected could be inhaled into the sensor body 1 and flows smoothly therein. Then the detection system 2 is activated, which is able to detect and analyze the concentration of PM 2.5 particles of the gas to be detected in the airflow channel 11.

The above-mentioned detection system 2 comprises a laser diode 21, a lens 22, a photodiode 23 and a light absorption assembly 24. The laser diode 21 and the lens 22 are connected in match, and provided on one side of the airflow channel 11; in cooperation with it, the photodiode 23 is provided within the airflow channel 11, and located on the side of the laser diode 21 producing a detection laser. The light absorption assembly 24 is fixed on the sensor body 1, and the detection laser produced by the laser diode 21, after passing through the airflow channel 11, irradiates onto the light absorption assembly 24.

During detection, the laser diode 21 within the sensor is capable of producing detection lasers, all of which emit from the identical luminous point and irradiate to the lens 22, and a refraction phenomenon occurs when the lasers enter and leave the lens 22. After leaving the lens 22, the detection lasers pass through the gas to be detected, and after passing the airflow channel 11, irradiate onto the light absorption assembly 24. Meanwhile, due to the refraction effect of the lens 22, the detection lasers could form a focus in the airflow channel 11, which is right in front of the center of the receiving end of the photodiode 23. The photodiode 23 is able to receive the light signal information from the detection lasers at the focus, and converts the received light signal into electric signal, simultaneously completing the detection to the gas to be detected. Besides, the detection lasers passing through the focus continue to irradiate toward the light absorption assembly 24, finally onto it, and are absorbed by the same. It avoids that the detection lasers passing though the focus irradiate onto the inside wall of the sensor body 1 and scatter within the airflow channel 11, and that the scattered detection lasers are received by the photodiode 23 by mistake, affecting the detection value of the detection system 2 to the gas to be detected.

When in use, it is found that the temperature values of the working environments of the above-mentioned laser PM 2.5 dust sensor are usually -40°C - 85°C, and the variation of the temperature would have effect on the lens 22 in the detection system 2, that is, when the temperature rises, the refraction index of the lens 22 decreases, and the focus displaces far away from the lens 22; conversely, when the temperature falls, the refraction index of the lens 22 increases, and the focus displaces toward the lens 22. Meanwhile the displacement amounts of the focus and the temperature values of the working environments have a functional relationship. Due to that the focus displaces to leave the right front of the photodiode 23, the point with the largest light power displaces, such that the light scattered by the particles with the same size, after being received by the photodiode, produces different signals, thereby leading to erroneous test results. Hence the photodiode 23 fails to receive the accurate light signal information from the detection laser at the focus, affecting the detection value of the detection system 2 to the gas to be detected. Only when the position and intensity of the focus remains the same, can the signal produced in the photodiode 23 by the scattered light produced by the same particles keep steady and highly accurate.

To solve the aforementioned problems, the above-mentioned laser PM 2.5 dust sensor further comprises a temperature control mechanism 3, which comprises a PCB 31, a temperature sensing assembly 32, and a telescopic assembly 33. The laser diode 21 is provided fixedly at the end of the telescopic assembly 33 toward the airflow channel 11, while at the other end of the telescopic assembly 33 is provided fixedly with the PCB 31. The lens 22 is provided fixedly between the laser diode 21 and the airflow channel 11. The temperature sensing assembly 32 and the telescopic assembly 33 are connected electrically with the PCB 31 respectively. The PCB 31 is able to obtain the temperature value of the working environment in which the sensor locates by means of the temperature sensing assembly 32, and further, according to the temperature value, determines the moving direction and distance of the focus through the above-mentioned functional relationship. Then on the basis of the movement of the focus, the PCB 31 controls the laser diode 21 by the means of the telescopic assembly 33 to extend toward the lens 22, or to shrink far away from the lens 22, wherein the extending or shrinking distance is the same as the moving distance of the focus, such that the focus which displaces due to temperature variation, can return its original position again.

The temperature control mechanism 3 further comprises a lining assembly 34 which is provided with a telescopic chamber 341 and a laser chamber 342. The telescopic assembly 33 is provided within the telescopic chamber 341 and is connected slidably with the inside wall thereof. The laser diode 21 is provided within the laser chamber 342 and is connected slidably with the inside wall thereof. The lens 22 is fixed at the end of the laser chamber 342 toward the airflow channel 11. Through the provision of the lining assembly 34, the telescopic assembly 33 and the laser diode 21 can only move back and forth along the radial direction of the lining assembly 34, thereby avoiding the displacement of the telescopic assembly 33 and the laser diode 21 along the circumferential direction of lining assembly 34, which disables the focus displaced owing to the temperature variation to return its original position.

The sensor body 1 is provided with a mounting chamber 12, the end of which toward the airflow channel 11 communicates with the airflow channel 11, while the other end of which is provided with a dismounting hole 121. Both the detection system 2 and the temperature control mechanism 3 are mounted detachably within the mounting chamber 12. In the present embodiment, the detachable mounting way features that the lining assembly 34 is provided with a slot 343, and in cooperation with it, the sensor body 1 is provided with a pinhole 13 and a pin 14.

During assembly, first the laser diode 21 and the PCB 31 connected securely with a temperature sensing assembly 32 are mounted fixedly at the two ends of the telescopic assembly 33, then are mounted fixedly at the end of the lining assembly 34 toward the dismounting hole 121, while the lens 22 is mounted fixedly at the end of the lining assembly 34 toward the airflow channel 11. Then, referring to the positions of the slot 343 and the pinhole 13, the detection system 2 and the temperature control mechanism 3 fixedly connected together are plugged into the mounting chamber 12 from the dismounting hole 121 until the slot 343 and the pinhole 13 coincide with each other. At this time, the pin 14 is inserted into the pinhole 13 until the pin 14 is inserted into the slot 343, with the detection system 2 and the temperature control mechanism 3 fixedly connected together being stuck into the mounting chamber 12. When it is necessary to take the detection system 2 and the temperature control mechanism 3 out of the sensor body 1, only the pin 14 needs to be pulled out to release the sticking effect of the pin 14 to the slot 343, then the detection system 2 and the temperature control mechanism 3 fixedly connected together can be taken out of the dismounting hole 121. Thus the laser PM 2.5 dust sensor of the present invention has the advantages of convenience for mounting and maintenance.

The embodiment and drawings are not meant to limit the product form and style of the present invention. Any appropriate change or modification made by the ordinary skilled in the art should not be treated as departing from the patent concept of the present invention.

## Claims

1. A laser auto-focus PM 2.5 dust sensor, comprising a sensor body (1) and a detection system (2) provided within the sensor body (1); in the sensor body (1), an airflow channel (11) is provided for gas to be detected to pass through; the detection system (2) comprises a laser diode (21), a lens (22), and a photodiode (23); **characterized in that** the laser diode (21) and the lens (22) are connected in match, and provided on one side of the airflow channel (11); in cooperation with it, the photodiode (23) is provided within the airflow channel (11), and located on the side of the laser diode (21) producing a detection laser, wherein the laser PM 2.5 dust sensor further comprises a temperature control mechanism (3), which comprises a PCB (31), a temperature sensing assembly (32), and a telescopic assembly (33), whereat said PCB (31) is able to obtain the temperature value of the working environment in which said sensor locates by means of said temperature sensing assembly (32), and further, according to the temperature value, is able to determine the moving direction and distance of the focus, whereat on the basis of the movement of said focus, said PCB (31) is able to control said laser diode (21) by the means of said telescopic assembly (33) to extend toward said lens (22) or to shrink far away from said lens (22), wherein the extending or shrinking distance is the same as the moving distance of said focus, such that said focus, which displaces due to temperature variation, can return to its original position; the laser diode (21) is provided fixedly at the end of the telescopic assembly (33) toward the airflow channel (11), while at the other end of the telescopic assembly (33) is provided fixedly with the PCB (31); the lens (22) is provided fixedly between the laser diode (21) and the airflow channel (11); and the temperature sensing assembly (32) and the telescopic assembly (33) are connected electrically with the PCB (31) respectively.

2. The laser auto-focus PM 2.5 dust sensor according to Claim 1, wherein the temperature control mechanism (3) further comprises a lining assembly (34) which is provided with a telescopic chamber (341) and a laser chamber (342); the telescopic assembly (33) is provided within the telescopic chamber (341) and is connected slidably with the inside wall thereof; the laser diode (21) is provided within the laser chamber (342) and is connected slidably with the inside wall thereof; the lens (22) is fixed at the end of the laser chamber (342) toward the airflow channel (11).

3. The laser auto-focus PM 2.5 dust sensor according to Claim 2, wherein the sensor body (1) is provided with a mounting chamber (12), the end of which toward the airflow channel (11) communicates with the airflow channel (11), while the other end of which is provided with a dismounting hole (121); both the detection system (2) and the temperature control mechanism (3) are mounted detachably within the mounting chamber (12).

4. The laser auto-focus PM 2.5 dust sensor according to Claim 3, wherein the lining assembly (34) is provided with a slot (343), and in cooperation with it, the sensor body (1) is provided with a pinhole (13) and a pin (14).

5. The laser auto-focus PM 2.5 dust sensor according to Claim 1, wherein the detection system (2) further comprises a light absorption assembly (24); the light absorption assembly (24) is fixed on the sensor body (1), and the detection laser produced by the laser diode (21), after passing through the airflow channel (11), irradiates onto the light absorption assembly (24).

## Patentansprüche

1. Laser-Auto-Fokus-PM-2.5-Partikeldetektor, umfassend einen Detektorkörper (1) und ein Detektionssystem (2), bereitgestellt in dem Detektorkörper (1); in dem Detektorkörper (1) ist ein Luftstromkanal (11) für Gas bereitgestellt, dessen Hindurchfließen zu detektieren ist; wobei das Detektionssystem (2) eine Laserdiode (21), eine Linse (22) und eine Fotodiode (23) umfasst; **dadurch gekennzeichnet, dass**
die Laserdiode (21) und die Linse (22) passend verbunden sind, und auf einer Seite des Luftstromkanals (11) bereitgestellt sind; mit ihm zusammenwirkend, ist die Fotodiode (23) innerhalb des Luftstromkanals (11) bereitgestellt und auf der Seite der Laserdiode (21), die einen Detektionslaser produziert, angeordnet, wobei der Laser-PM-2.5-Partikeldetektor ferner einen Temperaturregelmechanismus (3) umfasst, der eine PCB (31), eine Temperaturmessanordnung (32) und eine teleskopische Anordnung (33) umfasst, wobei die PCB (31) den Temperaturwert der Arbeitsumgebung, in welcher sich der Detektor befindet, mittels der Temperaturmessanordnung (32) erhalten kann und ferner, gemäß dem Temperaturwert, Bewegungsrichtung und Abstand des Fokus feststellen kann, wobei die PCB (31) auf Grundlage der Bewegung des Fokus die Laserdiode (21) mittels der teleskopischen Anordnung (33) so regeln kann, dass sie sich in Richtung der Linse (22) ausbreitet oder sich fern der Linse (22) zurückzieht, wobei der Ausbreitungs- oder der Rückzugsabstand der gleiche wie der Bewegungsabstand des Fokus ist, sodass der Fokus, der sich aufgrund von Temperaturschwankung verschiebt, in seine ursprüngliche Position zurückkehren kann; die Laserdiode (21) fest am Ende der teleskopischen Anordnung (33) in Richtung des Luftstromkanals (11) bereitgestellt ist, während das andere Ende der teleskopischen Anordnung (33) fest mit der PCB (31) bereitgestellt ist; die Linse (22) fest zwischen der Laserdiode (21) und dem Luftstromkanal (11) bereitgestellt ist; und die Temperaturmessanordnung (32) beziehungsweise die teleskopische Anordnung (33) elektrisch mit der PCB (31) verbunden sind.

2. Laser-Auto-Fokus-PM-2.5-Partikeldetektor nach Anspruch 1, wobei der Temperaturregelmechanismus (3) ferner eine Auskleidungsanordnung (34) umfasst, die mit einer teleskopischen Kammer (341) und einer Laserkammer (342) versehen ist;
wobei die teleskopische Anordnung (33) innerhalb der teleskopischen Kammer (341) bereitgestellt ist und mit deren Innenwand verschiebbar verbunden ist; die Laserdiode (21) innerhalb der Laserkammer (342) bereitgestellt ist und mit deren Innenwand verschiebbar verbunden ist; die Linse (22) am Ende der Laserkammer (342) in Richtung des Luftstromkanals (11) befestigt ist.

3. Laser-Auto-Fokus-PM-2.5-Partikeldetektor nach Anspruch 2, wobei der Detektorkörper (1) mit einer Montagekammer (12) versehen ist, deren Ende in Richtung des Luftstromkanals (11) sich mit dem Luftstromkanal (11) im Austausch befindet, während deren anderes Ende mit einem Demontageloch (121) versehen ist; wobei sowohl das Detektionssystem (2) als auch der Temperaturregelmechanismus (3) lösbar in der Montagekammer (12) montiert sind.

4. Laser-Auto-Fokus-PM-2.5-Partikeldetektor nach Anspruch 3, wobei die Auskleidungsanordnung (34) mit einem Schlitz (343) versehen ist, und mit diesem zusammenwirkend, ist der Detektorkörper (1) mit einem Stiftloch (13) und einem Stift (14) versehen.

5. Laser-Auto-Focus-PM-2.5-Partikeldetektor nach Anspruch 1, wobei das Detektionssystem (2) ferner eine Lichtabsorptionsanordnung (24) umfasst; wobei die Lichtabsorptionsanordnung (24) am Detektorkörper (1) befestigt ist, und der von der Laserdiode (21) produzierte Detektionslaser strahlt nach dem Durchlaufen des Luftstromkanals (11) auf die Lichtabsorptionsanordnung (24).

## Revendications

1. Capteur de poussière PM 2.5 à mise au point automatique de laser, comprenant un corps de capteur (1) et un système de détection (2) prévu au sein du corps de capteur (1) ; dans le corps de capteur (1), un canal d'écoulement d'air (11) est prévu pour le passage de gaz devant être détecté ; le système de détection (2) comprend une diode laser (21), une lentille (22) et une photodiode (23) ;
**caractérisé en ce que**
la diode laser (21) et la lentille (22) sont connectées en correspondance, et prévue sur un côté du canal d'écoulement d'air (11), en coopération avec lui, la photodiode (23) est prévue au sein du canal d'écoulement d'air (11), et située sur le côté de la diode laser (21), produisant un laser de détection, dans lequel le capteur de poussière PM 2.5 laser comprend en outre un mécanisme de commande de température (3), qui comprend une carte de circuit imprimé (31), un ensemble de détection de température (32) et un ensemble télescopique (33), dans lequel ladite carte de circuit imprimé (31) est capable d'obtenir la valeur de température de l'environnement de travail dans lequel ledit capteur se situe au moyen dudit ensemble de détection de température (32), et en outre, en fonction de la valeur de température, est capable de déterminer la direction de déplacement et la distance du foyer, après quoi sur la base du mouvement dudit foyer, ladite carte de circuit imprimé (31) est capable de commander ladite diode laser (21) au moyen dudit ensemble télescopique (33) pour s'étendre vers ladite lentille (22) ou se rétracter à distance de ladite lentille (22), dans lequel la distance d'extension ou de rétraction est la même que la distance de déplacement dudit foyer, de sorte que ledit foyer, qui se déplace en raison d'une variation de température, peut retourner à sa position d'origine ; la diode laser (21) est prévue de manière fixe à l'extrémité de l'ensemble télescopique (33) vers le canal d'écoulement d'air (11), tandis que l'autre extrémité de l'ensemble télescopique (33) est pourvue de la carte de circuit imprimé (31) de manière fixe ; la lentille (22) est prévue de manière fixe entre la diode laser (21) et le canal d'écoulement d'air (11) ; et l'ensemble de détection de température (32) et l'ensemble télescopique (33) sont électriquement connectés à la carte de circuit imprimé (31), respectivement.

2. Capteur de poussière PM 2.5 à mise au point automatique de laser selon la revendication 1, dans lequel le mécanisme de commande de température (3) comprend en outre un ensemble de revêtement (34) qui est pourvu d'une chambre télescopique (341) et d'une chambre laser (342) ; l'ensemble télescopique (33) est prévu au sein de la chambre télescopique (341) et est connecté de manière coulissante à la paroi intérieure de celle-ci ; la diode laser (21) est prévue au sein de la chambre laser (342) et est connectée de manière coulissante à la paroi intérieure de celle-ci ; la lentille (22) est fixée à l'extrémité de la chambre laser (342) vers le canal d'écoulement d'air (11).

3. Capteur de poussière PM 2.5 à mise au point automatique de laser selon la revendication 2, dans lequel le corps de capteur (1) est pourvu d'une chambre de montage (12) dont l'extrémité vers le canal d'écoulement d'air (11) communique avec le canal d'écoulement d'air (11), tandis que son autre extrémité est pourvue d'un orifice de démontage (121) ; le système de détection (2) et le mécanisme de commande de température (3) sont tous deux montés de manière amovible au sein de la chambre de montage (12).

4. Capteur de poussière PM 2.5 à mise au point automatique de laser selon la revendication 3, dans lequel l'ensemble de revêtement (34) est pourvu d'une fente (343), et en coopération avec elle, le corps de capteur (1) est pourvu d'un trou d'épingle (13) et d'une épingle (14).

5. Capteur de poussière PM 2.5 à mise au point automatique de laser selon la revendication 1, dans lequel le système de détection (2) comprend en outre un ensemble d'absorption lumineuse (24), l'ensemble d'absorption lumineuse (24) est fixé sur le corps de capteur (1), et le laser de détection produit par la diode laser (21), après son passage à travers le canal d'écoulement d'air (11), irradie sur l'ensemble d'absorption lumineuse (24).
